# EUROPÄISCHE PATENTSCHRIFT

(11) **EP 1 071 922 B1**
(45) Veröffentlichungstag und Bekanntmachung des Hinweises auf die Patenterteilung: **08.12.2004**
(21) Anmeldenummer: 99919246.1
(22) Anmeldetag: 10.04.1999
(51) Int. Cl.: G01B 11/00

(54) **VERFAHREN UND ANORDNUNG ZUR ERFASSUNG DER GEOMETRIE VON GEGENSTÄNDEN MITTELS EINES KOORDINATENMESSGERÄTS**
METHOD AND ARRANGEMENT FOR DETERMINING THE GEOMETRY OF OBJECTS USING A COORDINATE MEASURING DEVICE
PROCEDE ET DISPOSITIF PERMETTANT DE DETECTER LA GEOMETRIE D'OBJETS A L'AIDE D'APPAREILS DE MESURE DE COORDONNEES

(30) Priorität: 11.04.1998 DE 19816270
(43) Veröffentlichungstag der Anmeldung: 31.01.2001
(73) Patentinhaber: Werth Messtechnik GmbH, 35394 Giessen (DE)
(72) Erfinder: CHRISTOPH, Ralf, D-35641 Schöffengrund (DE)
(74) Vertreter: Stoffregen, Hans-Herbert, Dr. Dipl.-Phys.
(86) Internationale Anmeldenummer: PCT/EP1999/002568
(87) Internationale Veröffentlichungsnummer: WO 1999/053268

(56) Entgegenhaltungen:
- EP-A- 0 427 692
- US-A- 5 825 666

## Beschreibung

Die Erfindung bezieht sich auf ein Verfahren und eine Anordnung zur Messung der Geometrie von Gegenständen mittels eines Koordinatenmessgeräts mit einem optischen System zur Erfassung und Abbildung wenigstens eines Lichtflecks, Lichtpunkts, Kontrastübergangs oder einer Kante, dessen bzw. deren Lage von der Geometrie bestimmt wird, auf wenigstens einen Detektor, dessen Ausgangssignale ausgewertet werden, wobei mit dem optischen System ein wählbarer Abbildungsmaßstab und ein wählbarer Abstand zum jeweiligen Gegenstand einstellbar sind.

Ein Verfahren und eine Anordnung der vorstehend beschriebenen Art sind bekannt (R.-J. Ahlers, W. Rauh: "Koordinatenmesstechnik mit Bildverarbeitung" in: VDI-Z 131 (1989) Nr. 11, Seiten 12 - 16). Das bekannte Koordinatenmessgerät hat eine spezielle Optik mit einem telezentrischen Strahlengang. Die Optik ist weiterhin so aufgebaut, dass ein Vergrößerungswechsel keine Änderung des Objektabstands zur Folge hat. Für Höhenmessungen ist bei dem bekannten Koordinatenmessgerät eine Autofoh-ussiereinrichtung vorgesehen, die als Nullindikator arbeitet und eine zusätzliche mechanische Bewegung in der dritten Dimension nötig macht.

Bekannt ist auch eine Steuereinrichtung für Objektive mit veränderbarer Brennweite, bei denen eine Frontlinsengruppe, ein erstes Schiebeglied zur Brennweitenänderung und ein zweites Schiebeglied zum Konstanthalten des Bildortes jeweils mit Antriebssystemen zur axialen Verschiebung verbunden sind. Die Steuerung enthält eine Torschaltung, mit der die optischen Schiebeglieder an beliebiger Stelle unabhängig von den Eingangsbedingungen stillgesetzt werden können (DE 26 11 639 C3).

Aus der DE 196 39 780 A1 ist ein Koordinatenmessgerät bekannt, mit der zur Erfassung von Strukturen von Gegenständen sowohl taktil als auch optisch gemessen wird. Dabei kann eine automatische Fokussierung des optischen Systems mittels einer Kamera erfolgen. Aus der US 5,035,503 ist ein Koordinatenmessgerät mit einer Zoomoptik bekannt, die zum Erfassen und Korrigieren von Verfahrfehlern eines klassischen Koordinatenmessgerätes eingesetzt wird. Die Optik selbst wird nicht zum direkten Messen von Objekten benutzt.

Schließlich ist eine Vorrichtung zur Messung geometrischer Strukturen mit einem Photogrammiersystem und einem Taststift aus biegeelastischem Schaft und einem mit dem Schaft verbundenen Antastelement bekannt, das bei der Messung in Berührung mit dem Messobjekt gebracht wird. Am Schaft sind Zielmarken, z. B. Kugeln, angebracht, deren Position relativ zum Tastbezugssystem vom Photogrammiersystem erfasst wird. Die Position des Antastelementes wird aus den Zielmarkenpositionen, die Licht abstrahlen, gemessen (DE 297 10 242 U1).

Aus der US 5,523,583 ist ein Videomessgerät mit verstellbaren Linsen bekannt, um gleichzeitig Abbildungsmaßstab und Arbeitsabstand zu verstellen.

Der Erfindung liegt das Problem zu Grunde, ein für einen weiten Einsatzbereich geeignetes Verfahren und eine Anordnung für die Verwendung in einem weiten Einsatzbereich zur Messung der Geometrie von Gegenständen mit einem optischen System bereitzustellen, das mit geringem Aufwand geometrieabhängig erzeugtes Licht erfasst und auf wenigstens einem Detektor abbildet sowie in einem großen Messbereich hohe Auflösungen ermöglicht.

Das Problem wird bei einem Verfahren der eingangs beschriebenen Art erfindungsgemäß im Wesentlichen dadurch gelöst, dass das optische System eine Zoomoptik umfasst, deren Linsengruppen jeweils motorisch in Stellungen für den Abbildungsmaßstab und den Abstand zum Gegenstand separat bewegt werden. Dieses Verfahren eignet sich zur genauen Messung von Geometrien, die große Unterschiede im Profilverlauf haben können.

Bei einer besonders zweckmäßigen Ausführungsform wird das topographieabhängige Licht durch ein Tastelement erzeugt, das mit dem Gegenstand in Berührung gebracht wird und dessen Position unmittelbar oder mittelbar über mindestens eine Zielmarke mit dem optischen System festgestellt wird. Diese Ausführungsform gestattet die Auswahl zwischen einem optischen, d. h. berührungslos arbeitenden Verfahren und einem mit mechanischer Abtastung arbeitenden, d. h. optisch-mechanischen Verfahren. Die Auswahl richtet sich nach der Art der jeweiligen zu messenden Geometrie, den Materialeigenschaften, dem gewünschten Abbildungsmaßstab, der gewünschten Schärfentiefe und dem gewünschten Messabstand bzw. Arbeitsabstand.

Bei der Messung der Geometrie des Gegenstandes mit Hilfe des Tastelements wird der Arbeitsabstand des optischen Systems zweckmäßigerweise mit der Zoomoptik so eingestellt, dass sich die Objekt- bzw. Messebene in der Mitte des Tastelements befindet.

Bei der Messung der Oberflächentopographie ohne Tastelement, d. h. nur optisch, wird der Arbeitsabstand des optischen Systems mit der Zoomoptik vorzugsweise so eingestellt, dass sich die Objekt- bzw. Messebene vor dem Tastelement befindet. Dabei liegt das Tastelement außerhalb der Schärfentiefe des optischen Systems und ist nicht sichtbar.

Alternativ kann mit der Zoomoptik die Objekt- und Messebene im Raum auf der dem Gegenstand zugewandten Seite des Tastelements eingestellt werden.

Insbesondere wird die Position des Tastelements und/oder der wenigstens einen Zielmarke mittels reflektierender und/oder durch dieses bzw. diese abschattender und/oder von dem Tastelement abstrahlender Strahlung bestimmt.

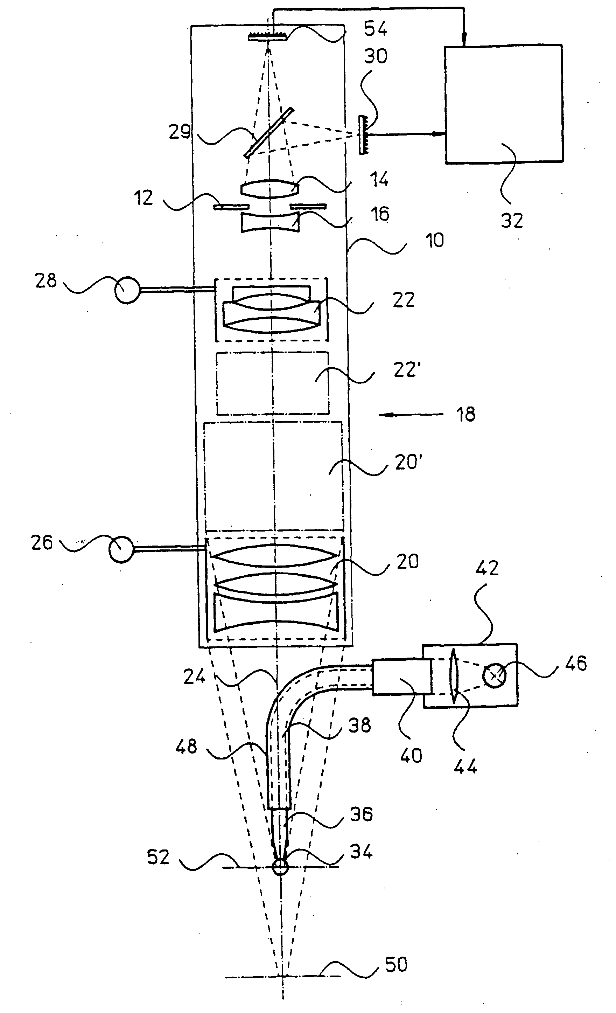

Zweckmäßigerweise wird die bei Berührung des Gegenstandes hervorgerufene Auslenkung des Tastelements mittels des optischen Systems gemessen. Die Auslenkung kann durch die Verschiebung der Abbildung des Tastelements auf dem Detektor festgestellt werden. Es ist auch möglich, die Auslenkung des Tastelements durch Auswerten der Kontrastfunktion der Abbildung mittels eines Bildverarbeitungssystems zu bestimmen. Die Auslenkung kann auch aus einer Größenänderung der Abbildung der wenigstens einen Zielmarke bestimmt werden, die auf dem strahlenoptischen Zusammenhang zwischen Objekt-Abstand und Vergrößerung beruht. Weiterhin kann die Auslenkung des Tastelements durch die scheinbare Größenänderung der Zielmarkenabbildung aufgrund des Kontrastverlustes durch Defokussierung bestimmt werden.

Bei einer Anordnung für die Messung der Geometrie von Gegenständen mittels eines Koordinatenmessgerätes mit einem optischen System zur Erfassung und Abbildung wenigstens eines Lichtflecks, Lichtpunkts, Kontrastübergangs oder Kante, dessen bzw. deren Lage von der Oberflächentopographie bestimmt wird, auf wenigstens einem Detektor, dessen Ausgangssignale auswertbar sind, wobei das optische System für die Einstellung eines wählbaren Abbildungsmaßstabs und eines wählbaren Abstands zum jeweiligen Gegenstand ausgebildet ist, wird das Problem erfindungsgemäß im Wesentlichen dadurch gelöst, dass das optische System eine Zoomoptik aufweist, die wenigstens zwei axial jeweils separat motorisch verschiebbare Linsengruppen enthält. Mit den Linsengruppen bzw. Linsenpaketen werden der Abbildungsmaßstab und/oder der Arbeitsabstand und/oder die Schärfentiefe verändert bzw. eingestellt.

Bei einer vorteilhaften Weiterbildung der Anordnung ist ein Tastelement und/oder wenigstens eine diesem zugeordnete Zielmarke zur optischen Positionserfassung vor dem optischen System vorgesehen. Durch die Anordnung des Tastelements bzw. wenigstens der einen Zielmarke kann die erfindungsgemäße Messanordnung in zwei verschiedenen Betriebsarten arbeiten. In der einen Betriebsart wird die Geometrie ohne Berührung des Gegenstandes gemessen. In der anderen Betriebsart wird die Geometrie durch die Abtastung und Auslenkung des Tastelements mittelbar optisch gemessen. Bei der Messung ohne Tastelement wird die Zoom- bzw. Variooptik so eingestellt, dass sich die Objekt- bzw. Messebene vor der dem optischen System zugewandten Seite des Tastelements befindet, d. h. das Tastelement liegt außerhalb der Schärfentiefe des optischen Systems. Das Tastelement ist "unsichtbar". Wird die Auslenkung des Tastelements für die Messung verwendet, dann wird die Objektebene mittels der Zoomoptik in die Mitte des Tastelements gelegt.

Das Tastelement ist vorzugsweise am Ende eines biegeelastischen Glasfaser- bzw. Lichtleitertaststifts angeordnet. Der Glasfasertaststift kann am Ende kugelig ausgebildet sein. Es ist auch möglich, den Glasfasertaststift mit wenigstens einer Zielmarke zu versehen. Durch den Lichtleiter wird dem Ende des Stifts bzw. der oder den Zielmarken Licht zugeführt, das vom Ende bzw. von den Zielmarken abgestrahlt wird.

Es ist aber auch möglich, das Tastelement bzw. die Zielmarke als Reflektor an oder auf einem Stift auszubilden.

Der Stift bzw. der Glasfaserstift sind vorzugsweise L-förmig gebogen, wobei der an das Tastende angrenzende Abschnitt längs der optischen Achse des optischen Systems angeordnet ist.

Durch die zwei möglichen Betriebsarten wird der Einsatzbereich der erfindungsgemäßen Messanordnung erweitert. Die Art der Messung kann auf die Struktur der jeweiligen Objektoberfläche abgestimmt werden. Die Messanordnung ist demnach als breit einsetzbarer Rauheits-, Form- oder Welligkeitstester selbst für schwierige Konturen geeignet. Gemessen werden können Oberflächenstrukturen sowohl aus hartem als auch aus weichem Material wie Gummi oder Plastik.

Dabei kann zur definierten Einstellung der Antastkraft des Tastelementes der biegeelastische Stift oder Schaft von einer starren oder im Wesentlichen starren Führung gegebenenfalls verschiebbar aufgenommen sein, die von dem Stift bzw. Schaft mit einer gewünschten Biegelänge überragt wird, die das Tastelement bzw. eine diesem zugeordnete Zielmarke aufweist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines in einer Zeichnung dargestellten bevorzugten Ausführungsbeispiels.

In der Zeichnung ist schematisch eine Anordnung eines Koordinatenmessgerätes zur Erfassung der Geometrie von Objekten bzw. Gegenständen dargestellt. Die Anordnung enthält ein optisches System 10, das ein hinter einer Blende 12 angeordnetes Grundobjektiv 14 und eine vor der Blende 12 angeordnete feststehende Linse 16 aufweist. Eine Zoom- bzw. Variooptik 18 bildet den Vorsatz vor dem Grundobjektiv 14. Die Zoomoptik 18 enthält eine erste Linsengruppe 20 bzw. ein erstes Linsenpaket und eine zweite Linsengruppe 22 bzw. ein zweites Linsenpaket. Die beiden Linsengruppen 20, 22 sind unabhängig voneinander in ihren axialen Positionen längs einer optischen Achse 24 des optischen Systems 10 motorisch einstellbar. In der Zeichnung ist die Einstellbarkeit durch einen mit der Linsengruppe 20 verbundenen motorischen Antrieb 26 und einem mit der Linsengruppe 22 verbundenen motorischen Antrieb 28 schematisch dargestellt. In einer Abbildungsebene hinter dem Grundobjektiv 14, die außerhalb des längs der Achse 24 beweglichen optischen Systems 10 angeordnet ist, befindet sich ein insbesondere photoelektrischer Detektor 30, dem die aus dem Grundobjektiv 14 austretenden Strahlen über einen Umlenkspiegel 29 zugeführt werden und der ausgangsseitig mit einer Auswerteeinheit 32 verbunden ist, mit der die Ausgangssignale des Detektors 30 aufbereitet und verarbeitet werden. Die Auswerteeinheit 32 enthält insbesondere einen Rechner. Der Detektor 30 ist z. B. eine Kamera.

Vor dem optischen System 10 befindet sich in einem Abstand ein Tastelement 34, das am Ende eines Taststifts 36 angeordnet ist. Der Taststift 36 ist L-förmig gebogen bzw. abgewinkelt. Der mit dem Tastelement 34 verbundene Abschnitt des Taststifts vor der Krümmung, ist längs der optischen Achse 24 angeordnet, die auch durch das Tastelement 34 verläuft. Am Taststift 36 kann wenigstens eine Zielmarke angeordnet sein, die aber in der Zeichnung nicht dargestellt ist. Der Umlenkspiegel 29 ist teildurchlässig.

Das Tastelement 34 und/oder die Zielmarke können als eine Strahlung räumlich abstrahlender oder reflektierender Körper, insbesondere als Kugel oder Zylinder ausgebildet sein.

Der Taststift 36 ist zumindest in dem an das Tastelement 34 angrenzenden Abschnitt biegeelastisch. Ein rechtwinklig zur optischen Achse 24 abgewinkelter Abschnitt 38 ist an seinem Ende in einer Hülse 40 angeordnet, die an einem Halter 42 befestigt ist. Der Halter 42 kann mit einem in fünf Freiheitsgraden beweglichen Antriebsmechanismus verbunden sein. Halter 42 und optisches System 10 können miteinander verbunden sein bzw. eine starre Einheit bilden. Die Hülse 40 ist starr oder im Wesentlichen starr ausgebildet, so dass das über die Hülse 40 vorstehende freie Ende des biegeelastischen Taststifts 36 definiert biegbar ist, wodurch eine gewünschte Antastkraft des Tastelementes 34 vorgebbar ist. Der Schaft bzw. Taststift 36 kann dabei fest in der Führung bzw. Hülse 40 aufgenommen oder zu dieser verschiebbar ausgebildet sein, um die Biegelänge, d. h. den Abschnitt, der die Hülse 40 überragt, vorgeben zu können.

Der Taststift 36 ist vorzugsweise als Lichtleiter bzw. Glasfaserleiter ausgebildet, dessen im Halter 42 angeordnetes Ende über eine Optik 44 von einer Lichtquelle 46 angestrahlt wird. Der Lichtleiter ist bis auf den dem lichtdurchlässigen Tastelement 34 benachbarten Abschnitt von einer lichtundurchlässigen Hülle 48 umgeben.

Mit der in der Zeichnung dargestellten Anordnung können Oberflächen von Objekten nach zwei verschiedenen Verfahren, nämlich einem berührungslosen oder einem mechanisch/optischen gemessen werden. Beim berührungslosen, optisch abtastenden Verfahren wird die Zoomoptik 18 so eingestellt, dass der Arbeitsabstand 50 vor dem Tastelement 34 liegt. Die Linsengruppen 20 und 22 befinden sich dabei in den in der Zeichnung durch ausgezogene Linien dargestellten Positionen. Das Tastelement 34 liegt bei dieser Einstellung außerhalb der Schärfentiefe des optischen Systems 10. Dies bedeutet, dass er nicht sichtbar ist und daher nicht abgebildet wird. Mit der berührungslosen Abtastung können z. B. die Oberflächen von elastischem oder sogar weichem Material gemessen werden.

Beim mechanisch/optischen Verfahren wird die Position des in mechanischem Kontakt mit der Oberfläche des Objekts gebrachten Tastelements 34 gemessen. Zuvor wird die Zoomoptik 18 so eingestellt, dass sich die Objekt- bzw. Messebene 52 in der Mitte des Tastelements 34, der sogenannten Antastkugel befindet. Es wird also die Lage des Tastelements 34 bzw. die einer nicht dargestellten Zielmarke gemessen. Verformungen des Taststifts 36 haben keinen Einfluss auf die Messung.

Auslenkungen in der Richtung senkrecht zur Sensor- wie Kameraachse lassen sich direkt durch Verschiebung des Bildes in einem dem teildurchlässigen Umlenkspiegel 29 nachgeschalteten Sensorfeld 54, insbesondere einer elektronischen Kamera bestimmen. Die Auswertung des Bildes kann mit einer in einem Koordinatenmessgerät in der Auswerteeinheit 32 installierten Bildverarbeitung erfolgen. Damit ist ein zweidimensional arbeitendes Tastsystem realisiert, das sehr einfach an eine optische Auswerteeinheit gekoppelt werden kann.

Für eine Sensierung der Auslenkung in Richtung der optischen Sensor- wie Kameraachse sind mehrere Möglichkeiten gegeben, so u.a.:
1. Die Auslenkung des Tastelements 34 in Richtung der Sensorachse 24 (Kameraachse) wird durch den Detektor 30 gemessen, ein Fokussystem wie es in der optischen Koordinatenmesstechnik bei der Fokussierung auf die Werkstückoberfläche bereits bekannt ist. Hierbei wird die Kontrastfunktion des Bildes in der elektronischen Kamera ausgewertet.
2. Die Auslenkung des Tastelements in Richtung der Sensor- bzw. Kameraachse wird dadurch gemessen, dass die Abbildungsgröße einer Zielmarke ausgewertet wird, so z. B. bei einer kreis- oder ringförmigen Zielmarke die Veränderung des Durchmessers. Dieser Effekt ist bedingt durch die strahlenoptische Abbildung und lässt sich durch die Ausgestaltung der optischen Einheit gezielt optimieren.
3. Auch bei einer dritten Möglichkeit wird die Größenänderung der Zielmarke ausgewertet, jedoch die, welche sich aus der Kombination von strahlenoptischer Größenänderung und der scheinbaren Vergrößerung durch unscharfe Ränder ergibt. Gegenüber der Auswertung der Unschärfefunktion macht sich dieses Verfahren zunutze, dass die tatsächliche Größe der Zielmarke unveränderlich ist.

Die beiden Linsengruppen 20 und 22 sind bei der Objektvermessung mit dem Tastelement 34 in geringerem Abstand voneinander angeordnet als bei der optischen Abtastung. Die entsprechenden Positionen der Linsengruppen 20, 22 sind in der Zeichnung mit 20' und 22' bezeichnet.

Mit der oben beschriebenen Messanordnung lassen sich der Abbildungsmaßstab, die Schärfentiefe und der Arbeitsabstand verändern bzw. den Erfordernissen an die Genauigkeit und Geschwindigkeit der Oberflächenabtastung anpassen. Da die Messanordnung auch an die Materialeigenschaften wie Härte angepasst werden kann, ist sie für einen weiten Einsatzbereich geeignet.

## Patentansprüche

1. Verfahren zur Messung der Geometrie von Gegenständen mittels eines Koordinatenmessgeräts mit einem optischen System (10) zur Erfassung und Abbildung wenigstens eines Lichtflecks, Lichtpunkts, Kontrastübergangs und/oder einer Kante, dessen bzw. deren Lage von der Geometrie bestimmt wird, auf wenigstens einen Detektor (30), dessen Ausgangssignale ausgewertet werden, wobei mit dem optischen System ein wählbarer Abbildungsmaßstab und ein wählbarer Abstand zum jeweiligen Gegenstand einstellbar ist,
**dadurch gekennzeichnet,**
**dass** das optische System (10) eine Zoomoptik (18) umfasst, deren Linsengruppen (20,22) jeweils motorisch separat bewegt werden in Stellungen für den Abbildungsmaßstab und den Abstand zum Gegenstand.

2. Verfahren nach Anspruch 1,
**dadurch gekennzeichnet,**
**dass** der Lichtfleck, Lichtpunkt, Kontrastübergang oder die Kante durch ein Tastelement (34) erzeugt wird, das mit dem Gegenstand in Berührung gebracht wird und dessen Position unmittelbar oder mittelbar über wenigstens eine Zielmarke mit dem optischen System (10) festgestellt wird.

3. Verfahren nach Anspruch 2,
**dadurch gekennzeichnet,**
**dass** der Arbeitsabstand des optischen Systems (10) mit der Zoomoptik (18) derart eingestellt wird, dass sich die Objekt- bzw. Messebene in der Mitte des Tastelements (34) befindet.

4. Verfahren nach Anspruch 2,
**dadurch gekennzeichnet,**
**dass** der Arbeitsabstand des optischen Systems (10) mit der Zoomoptik (18) derart eingestellt wird, dass sich die Objekt- bzw. Messebene vor dem Tastelement (34) befindet.

5. Verfahren nach Anspruch 2 oder 3,
**dadurch gekennzeichnet,**
**dass** die bei Berührung des Gegenstandes hervorgerufene Auslenkung des Tastelements (34) mit dem optischen System (10) gemessen wird.

6. Verfahren nach zumindest Anspruch 1,
**dadurch gekennzeichnet,**
**dass** bei mechanisch/optischer Messung am jeweiligen Gegenstand der Lichtfleck, Lichtpunkt, Kontrastübergang oder die Kante durch ein Tastelement (34) erzeugt wird, das mit dem Gegenstand in Berührung gebracht wird und dessen Position unmittelbar oder mittelbar über wenigstens eine Zielmarke mit dem optischen System bei einem mit der Zoomoptik eingestellten Arbeitsabstand des optischen Systems festgestellt wird, bei dem die Objekt- bzw. Messebene das Tastelement schneidet, und dass bei berührungsloser Messung am jeweiligen Gegenstand der Arbeitsabstand des optischen Systems mit der Zoomoptik derart eingestellt wird, dass sich die Objekt- bzw. Messebene außerhalb des Tastelements befindet.

7. Anordnung für die Messung der Geometrie von Gegenständen mittels eines Koordinatenmessgeräts mit einem optischen System (10) zur Erfassung und Abbildung wenigstens eines Lichtflecks, Lichtpunkts, Kontrastübergangs oder einer Kante, dessen bzw. deren Lage von der Geometrie bestimmt wird, auf wenigstens einen Detektor (30), dessen Ausgangssignale auswertbar sind, wobei das optische System für die Einstellung eines wählbaren Abbildungsmaßstabs und eines wählbaren Abstands zum jeweiligen Gegenstand ausgebildet ist,
**dadurch gekennzeichnet,**
**dass** das optische System (10) eine Zoomoptik (18) aufweist, die wenigstens zwei axial jeweils separat motorisch verschiebbare Linsengruppen (20, 22) enthält.

8. Anordnung nach Anspruch 7,
**dadurch gekennzeichnet,**
**dass** ein Tastelement (34) und/oder wenigstens eine diesem zugeordnete Zielmarke zur optischen Positionserfassung des Lichtflecks oder Lichtpunkts vor dem optischen System (10) angeordnet ist, wobei das Tastelement und/oder die Zielmarke mit dem optischen System messbar ist.

9. Anordnung nach Anspruch 8,
**dadurch gekennzeichnet,**
**dass** mit der Zoomoptik (18) die Objekt- bzw. Messebene im Raum auf der dem Gegenstand zugewandten Seite des Tastelements (34) eingestellt ist.

10. Anordnung nach zumindest einem der Ansprüche 8 und 9,
**dadurch gekennzeichnet,**
**dass** mit der Zoomoptik (18) die Objekt- bzw. Messebene im Raum vor der dem optischen System (10) zugewandten Seite des Tastelements (34) eingestellt ist.

11. Anordnung nach zumindest einem der Ansprüche 8 bis 10,
**dadurch gekennzeichnet,**
**dass** mit der Zoomoptik (18) die Objekt- bzw. Messebene durch das Tastelement (34) insbesondere dessen Mitte verlaufend eingestellt ist.

12. Anordnung nach zumindest einem der Ansprüche 8 bis 11,
**dadurch gekennzeichnet,**
**dass** das Tastelement (34) am Ende eines Lichtleitertaststifts (36) angeordnet ist.

13. Anordnung nach zumindest Anspruch 12,
**dadurch gekennzeichnet,**
**dass** der Lichtleitertaststift (36) am Ende ein lichtdurchlässiges kugeliges Tastelement (34) trägt.

14. Anordnung nach zumindest einem der Ansprüche 8 bis 13,
**dadurch gekennzeichnet,**
**dass** das Tastelement (34) oder wenigstens eine diesem zugeordnete Zielmarke als Reflektor ausgebildet ist, der mit einem Stift oder Schaft (36) verbunden ist.

15. Anordnung nach zumindest Anspruch 14,
**dadurch gekennzeichnet,**
**dass** der Stift oder Schaft (36) mit Ausnahme einer freien das Tastelement (34) und/oder eine diesem zugeordnete Zielmarke aufweisenden Biegelänge innerhalb einer starren oder im Wesentlichen starren Führung wie die Hülse (40) verläuft.

16. Anordnung nach zumindest einem der Ansprüche 8 bis 15,
**dadurch gekennzeichnet,**
**dass** der Stift bzw. Schaft L-förmig abgewinkelt ist und dass der an das Tastelement (34) angrenzende Abschnitt des Stifts längs der optischen Achse (24) des optischen Systems (10) verläuft.

17. Anordnung nach zumindest einem der Ansprüche 7 bis 16,
**dadurch gekennzeichnet,**
**dass** ein Tastelement (34) und/oder wenigstens eine diesem zugeordnete Zielmarke zur optischen Positionserfassung des Lichtflecks oder Lichtpunkts vor dem optischen System (10) angeordnet ist und dass mit der Zoomoptik (18) die Objekt- bzw. Messebene bei einer ersten Betriebsart im Raum auf der dem jeweiligen Gegenstand zugewandten Seite des Tastelementes (34) und in einer zweiten Betriebsart im Raum vor der dem optischen System (10) zugewandten Seite des Tastelemetes (34) eingestellt ist.

18. Verfahren nach Anspruch 1,
**dadurch gekennzeichnet,**
**dass** der Abbildungsmaßstab unabhängig vom Arbeitsabstand oder der Abbildungsmaßstab unabhängig von der Schärfentiefe oder der Arbeitsabstand unabhängig von der Schärfentiefe verstellt wird und jeweils umgekehrt.

19. Anordnung nach Anspruch 7,
**dadurch gekennzeichnet,**
**dass** die wenigstens zwei axial jeweils separat motorisch verschiebbaren Linsengruppen (2, 22) derart verstellbar sind, dass der Abbildungsmaßstab unabhängig vom Arbeitsabstand oder der Abbildungsmaßstab unabhängig von der Schärfentiefe oder der Arbeitsabstand unabhängig von der Schärfentiefe verstellbar ist und jeweils umgekehrt.

## Claims

1. A method for measurement of the geometry of objects by means of a coordinate measuring device with an optical system (10) for measuring and imaging of at least one light dot, light spot, contrast transition and/or edge of which the position is determined by the geometry, on at least one detector (30) whose output signals are evaluated, where a selectable imaging scale and a selectable distance to the respective object can be adjusted using the optical system,
wherein
the optical system (10) comprises a zoom lens (18) of which the lens groups (20, 22) are each moved separately by motor power into positions for the imaging scale and the distance to the object.

2. Method according to Claim 1,
wherein
the light dot, light spot, contrast transition or edge is generated by a feeler element (34) which is brought into contact with the object and whose position is ascertained directly or indirectly using the optical system (10) by at least one target.

3. Method according to Claim 2,
wherein
the working distance of the optical system (10) is set with the zoom lens (18) such that the object/measuring plane is in the center of the feeler element (34).

4. Method according to Claim 2,
wherein
the working distance of the optical system (10) is set with the zoom lens (18) such that the object/measuring plane is in front of the feeler element (34).

5. Method according to Claim 2 or Claim 3,
wherein
the deflection of the feeler element (34) resulting from the contact with the object is measured using the optical system (10).

6. Method according to at least Claim 1,
wherein
for mechanical/optical measurement of the respective object the light dot, light spot, contrast transition or edge is generated by a feeler element (34) that is brought into contact with the object and whose position is ascertained directly or indirectly using the optical system by at least one target in the case of a working distance of the optical system set with the zoom lens at which the object/measuring plane intersects the feeler element, and wherein in the case of proximity-type measurement at the respective object the working distance of the optical system is set using the zoom lens such that the object/measuring plane is outside the feeler element.

7. An arrangement for measurement of the geometry of objects by means of a coordinate measuring device with an optical system (10) for measuring and imaging of at least one light dot, light spot, contrast transition or edge of which the position is determined by the geometry, on at least one detector (30) whose output signals are evaluated, where the optical system is designed to adjust a selectable imaging scale and a selectable distance to the respective object,
wherein
the optical system (10) has a zoom lens (18) containing at least two lens groups (20, 22) separately axially movable by motor power.

8. Arrangement according to Claim 7,
wherein
a feeler element (34) and/or at least one target assigned thereto is arranged for optical position determination of the light dot or light spot in front of the optical system (10), where the feeler element and/or the target is measurable with the optical system.

9. Arrangement according to Claim 8,
**wherein**
using the zoom lens (18) the object/measuring plane is set spatially on that side of the feeler element (34) facing the object.

10. Arrangement according to at least one of the Claims 8 and 9,
wherein
using the zoom lens (18) the object/measuring plane is set spatially in front of that side of the feeler element (34) facing the optical system (10).

11. Arrangement according to at least one of the Claims 8 to 10,
wherein
using the zoom lens (18) the object/measuring plane is set running through the feeler element (34), in particular through its center.

12. Arrangement according to at least one of the Claims 8 to 11,
wherein
the feeler element (34) is arranged at the end of a light guide feeler pin (36).

13. Arrangement according to at least one Claim 12,
wherein
the light guide feeler pin (36) has at the end a translucent spherical feeler element (34).

14. Arrangement according to at least one of the Claims 8 to 13,
wherein
the feeler element (34) and/or at least one target assigned thereto is designed as a reflector connected to a pin or shaft (36).

15. Arrangement according to at least Claim 14,
wherein
the pin or shaft (36) runs, with the exception of a free flexible length comprising the feeler element (34) and/or a target assigned thereto, inside a rigid or substantially rigid guide such as the sleeve (40).

16. Arrangement according to at least one of the Claims 8 to 15,
wherein
the pin or shaft is angled into an L-shape and that section of the pin adjacent to the feeler element (34) runs along the optical axis (24) of the optical system (10).

17. Arrangement according to at least one of the Claims 7 to 16,
wherein
a feeler element (34) and/or at least one target assigned thereto is arranged in front of the optical system (10) for optical position determination of the light dot or light spot, and wherein the object/measuring plane is set using the zoom lens (18) spatially on that side of the feeler element (34) facing the respective object in a first operating mode and spatially in front of that side of the feeler element (34) facing the optical system (10) in a second operating mode.

18. Method according to claim 1,
wherein
the imaging scale independent of the working distance or the imaging scale independent of the depth of field or the working distance independent of the depth of field is moved and vice versa in each case.

19. Arrangement according to claim 7,
wherein
the at least two lens groups (20, 22) separately axially movable by motor power are movable such, that the imaging scale independent of the working distance or the imaging scale independent of the depth of field or the working distance independent of the depth of field is moved and vice versa in each case.

## Revendications

1. Procédé permettant de mesurer la géométrie d'objets à l'aide d'appareils de mesure de coordonnées comprenant un système optique (10) permettant de détecter et de représenter au moins une tache lumineuse, un point lumineux, une transition de contraste et/ou un point d'inflexion, dont la position est déterminée par la géométrie, sur au moins un détecteur (30), dont les signaux de sortie sont évalués, selon lequel on peut régler à l'aide du système optique une échelle de représentation de l'image sélectionnable et une distance sélectionnable par rapport à chaque objet,
**caractérisé en ce que**
le système optique (10) comprend une optique zoom (18), dont les groupes de lentilles (20, 22) sont respectivement déplacés séparément de manière motorisée dans des positions pour l'échelle de représentation de l'image et pour la distance par rapport à l'objet.

2. Procédé selon la revendication 1,
**caractérisé en ce que**
la tache lumineuse, le point lumineux, la transition de contraste ou le point d'inflexion est généré(e) par un élément palpeur (34) qui est amené au contact de l'objet et sa position est déterminée indirectement ou directement à l'aide du système optique (10) par au moins un repère de cible.

3. Procédé selon la revendication 2,
**caractérisé en ce que**
la distance opérationnelle du système optique (10) avec l'optique zoom (18) est réglée de telle sorte que le plan de l'objet ou de la mesure se trouve au milieu de l'élément palpeur (34).

4. Procédé selon la revendication 2,
**caractérisé en ce que**
la distance opérationnelle du système optique (10) avec l'optique zoom (18) est réglée de telle sorte que le plan de l'objet ou de la mesure se trouve devant l'élément palpeur (34).

5. Procédé selon la revendication 2 ou 3,
**caractérisé en ce que**
le système optique (10) mesure la déviation de l'élément palpeur (34) provoquée par le contact de l'objet.

6. Procédé selon au moins la revendication 1,
**caractérisé en ce que**
la tache lumineuse, le point lumineux, la transition de contraste ou le point d'inflexion est généré(e), lors de la mesure mécanique/optique de l'objet respectif, par l'élément palpeur (34) qui est amené au contact de l'objet et dont la position est déterminée indirectement ou directement à l'aide du système optique par au moins un repère de cible dans une distance fonctionnelle réglée avec l'optique zoom du système optique, dans lequel le plan de l'objet ou de la mesure coupe l'élément palpeur, et, lors d'une mesure sans contact avec l'objet respectif, la distance opérationnelle du système optique avec l'optique zoom est réglée de telle sorte que le plan de l'objet ou de la mesure se trouve en dehors de l'élément palpeur.

7. Dispositif pour la mesure de la géométrie d'objets à l'aide d'un appareil de mesure de coordonnées comprenant un système optique (10) permettant de détecter et de représenter au moins une tache lumineuse, un point lumineux, une transition de contraste et/ou un point d'inflexion, dont la position est déterminée par la géométrie, sur au moins un détecteur (30), dont les signaux de sortie peuvent être évalués, dans lequel le système optique est configuré pour régler une échelle de représentation de l'image sélectionnable et une distance sélectionnable par rapport à chaque objet,
**caractérisé en ce que**
le système optique (10) comprend une optique zoom (18), qui contient au moins deux groupes de lentilles (20, 22) axiales, respectivement mobiles séparément de manière motorisée.

8. Dispositif selon la revendication 7,
**caractérisé en ce que**
un élément palpeur (34) et/ou au moins un repère de cible associé à celui-ci permettant de détecter de manière optique la position de la tache lumineuse ou du point lumineux est disposé devant le système optique (10), l'élément palpeur et/ou le repère de cible pouvant être mesuré avec le système optique.

9. Dispositif selon la revendication 8,
**caractérisé en ce qu'**
avec l'optique zoom (18), le plan de l'objet ou de la mesure est réglé dans la zone située sur le côté de l'élément palpeur (34) tourné vers l'objet.

10. Dispositif selon au moins une des revendications 8 et 9,
**caractérisé en ce qu'**
avec l'optique zoom (18), le plan de l'objet ou de la mesure est réglé dans la zone située devant le côté de l'élément palpeur (34) tourné vers le système optique (10).

11. Dispositif selon au moins une des revendications 8 à 10,
**caractérisé en ce qu'**
avec l'optique zoom (18), le plan de l'objet ou de la mesure est réglé par l'élément palpeur (34) en particulier en son milieu.

12. Dispositif selon au moins l'une des revendications 8 à 11,
**caractérisé en ce que**
l'élément palpeur (34) est disposé à l'extrémité d'une tige de palpeur conducteur de lumière (36).

13. Dispositif selon au moins la revendication 12,
**caractérisé en ce que**
la tige de palpeur conducteur de lumière (36) porte sur l'extrémité un élément palpeur (34) sphérique transparent à la lumière.

14. Dispositif selon au moins l'une des revendications 8 à 13,
**caractérisé en ce que**
l'élément palpeur (34) ou au moins un repère de cible associé à celui-ci est configuré comme un réflecteur qui est relié à une tige ou à une queue (36).

15. Dispositif selon au moins la revendication 14,
**caractérisé en ce que**
la tige ou la queue (36) s'étend, à l'exception d'une longueur coudée libre présentant l'élément palpeur (34) et/ou un repère de cible associé à celui-ci, à l'intérieur d'un élément de guidage rigide ou essentiellement rigide, tel un manchon (40).

16. Dispositif selon au moins l'une des revendications 8 à 15,
**caractérisé en ce que**
la tige ou la queue est coudée en forme de L et la section de la tige adjacente à l'élément palpeur (34) s'étend le long de l'axe optique (24) du système optique (10).

17. Dispositif selon au moins l'une des revendications 7 à 16,
**caractérisé en ce que**
un élément palpeur (34) et/ou au moins un repère de cible associé à celui-ci permettant de détecter la position de manière optique de la tache lumineuse ou
du point lumineux est disposé devant le système optique (10) et, avec l'optique zoom (18), le plan de l'objet ou de la mesure est réglé, dans un premier mode de fonctionnement, dans la zone située sur le côté de l'élément palpeur (34) tourné vers l'objet respectif et, dans un second mode de fonctionnement, dans la zone située devant le côté de l'élément palpeur (34) tourné vers le système optique (10).

18. Procédé selon la revendication 1,
**caractérisé en ce que**
l'échelle de représentation de l'image est réglée indépendamment de la distance de travail ou de la profondeur de champ, ou la distance de travail est réglée indépendamment de la profondeur de champ et inversement.

19. Dispositif selon la revendication 7,
**caractérisé en ce que**
les au moins deux groupes de lentilles (2, 22) axialement coulissant chacun séparément par moteur sont réglables de façon que l'échelle de représentation de l'image est réglée indépendamment de la distance de travail ou de la profondeur de champ, ou la distance de travail est réglée indépendamment de la profondeur de champ et inversement.
